# EUROPÄISCHE PATENTSCHRIFT

(11) **EP 0 508 029 B1**
(45) Veröffentlichungstag und Bekanntmachung des Hinweises auf die Patenterteilung: **08.06.1994**
(21) Anmeldenummer: 91810257.5
(22) Anmeldetag: 08.04.1991
(51) Int. Cl.: B21D 39/06, F16B 17/00

(54) **Verfahren zum Verbinden zweier Rohrstücke und Rohrverbindung nach dem Verfahren**
Method for connecting two tubular parts and pipe coupling using the same method
Procédé d'assemblage de deux pièces tubulaires et raccord selon ce procédé

(43) Veröffentlichungstag der Anmeldung: 14.10.1992
(73) Patentinhaber: Illi, Jacqueline, CH-8902 Urdorf (CH)
(72) Erfinder: Illi, Jacqueline, CH-8902 Urdorf (CH)
(74) Vertreter: Rottmann, Maximilian R.

(56) Entgegenhaltungen:
- AU-B- 28 732
- CH-A- 543 011
- FR-A- 2 301 720
- GB-A- 1 190 238
- US-A- 2 614 827

## Beschreibung

Die vorliegende Erfindung bezieht sich auf ein Verfahren entsprechend dem Oberbegriff des Anspruchs 1 zum Verbinden zweier Rohrstücke die wenigstens annähernd senkrecht zueinander stehen und unterschiedliche Durchmesser aufweisen, insbesondere zum Verbinden von Leitersprossen und Leiterholmen. Ferner betrifft die Erfindung eine nach dem Verfahren hergestellte Rohrverbindung entsprechend dem Oberbegriff des Anspruchs 4.

Aus der CH-A-543 011 ist bereits ein einfaches und sehr zuverlässiges Verfahren zum Verbinden von Rohrstücken bekannt geworden, welches darin besteht, dass in das Ende des dünneren Rohrs ein einen konischen Abschnitt aufweisender Stopfen mit dem schmalen Stopfenende eingeführt und das Rohrstückende samt Stopfen durch die Mantelbohrung hindurch so gegen eine, der Bohrung gegenüberliegende Auflage gepresst wird, dass der innerhalb der Bohrung vorstehende Rand des Rohrstücks durch Eindringen des Stopfens in das Rohrstück gegen den Bohrungsrand auseinandergespreizt und gestaucht wird. In dieser Weise kann eine wasserdichte und unlösbare Verbindung gebildet werden, welche sich insbesondere für in Kanalisationsschächten einzusetzende Leitern eignet, und welche widerstandsfähig gegen Säure, Dämpfe etc. sein müssen. Dies ist jedoch bei Leitern, die unter normalen Umständen gebraucht werden und keinen Säuredämpfen, Abwässern etc. ausgesetzt werden, gar nicht notwendig. Es genügt vielmehr, wenn eine zuverlässige Verbindung gebildet wird, welche an der Stelle, an der das Sprossende die Mantelbohrung des Leiterholms durchdringt, nicht absolut dicht zu sein braucht.

Ausgehend von der CH-A-543 011 ist es die Aufgabe der Erfindung, ein Verfahren wie eingangs beschrieben vorzuschlagen, welches gegenüber dem bekannten Verfahren wesentlich vereinfacht ist und ohne Verwendung eines Stopfens auskommt. Zu diesem Zwecke sieht die Erfindung ein Verfahren vor, welches die in Anspruch 1 aufgeführten Schritte umfasst. Besonders vorteilhafte Ausführungsmöglichkeiten des Verfahrens sind in den abhängigen Ansprüchen 2 und 3 definiert.

Die Rohrverbindung, welche das Ergebnis des Verfahrens bildet, ist in den Ansprüchen 4 - 7 gekennzeichnet.

Auf beiliegender Zeichnung ist ein Ausführungsbeispiel einer Rohrverbindung dargestellt, anhand welcher auch das Verfahren erläutert wird.

Es zeigen:

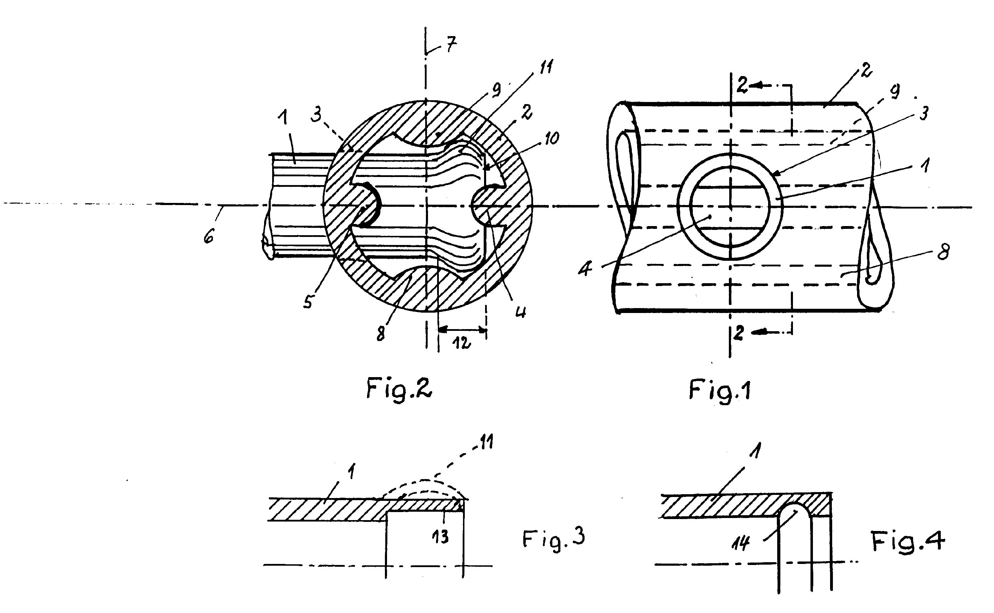

- Fig. 1: eine Ansicht auf eine Rohrverbindung;
- Fig. 2: einen Schnitt gemäss der Linie 2/2 in Fig. 1; und die
- Fig. 3 und 4: je eine Einzelheit.

Die erfindungsgemässe Rohrverbindung bezweckt das Verbinden zweier zumindest annähernd senkrecht zueinander stehender Rohrstücke mit unterschiedlichem Durchmesser. Vorgesehen ist gemäss dem Ausführungsbeispiel das Verbinden einer Leitersprosse 1 mit einem Leiterholm 2. Sowohl die Leitersprosse 1 als auch der Leiterholm 3 sind als Aluminiumrohre ausgebildet, wobei der im Durchmesser dickere Leiterholm 2 an den Stellen, wo die Verbindung mit den Sprossen 1 erfolgen soll, mit je einer Mantelbohrung 3 versehen ist, durch welche dann das entsprechende mit dem Leiterholm 2 zu verbindende Ende der Leitersprosse 1 hindurchgeführt wird. Es ist ferner noch zu erwähnen, dass gegenüber den Mantelbohrungen 3 sich in der Längsrichtung des Leiterholms 2 ein als Anschlag ausgebildeter Steg 4 erstreckt. Aus Symmetriegründen und zur wahlweisen Verwendung des Leiterholms 2 ist auch gegenüber dem Steg 4 ein weiterer Steg 5 vorhanden, welcher sich ebenfalls entlang des Leiterholms 2 erstreckt und an den Stellen, wo die Mantelbohrungen 3 angebracht sind, unterbrochen wird. Wie erwähnt, liegen die Stege 4 und 5 in einer gemeinsamen Mittelebene 6, während in der senkrecht dazu vorhandenen Mittelebene 7 zwei weitere Stege 8 und 9 vorhanden sind. Diese dienen als Hilfsanschläge und erstrecken sich ebenfalls entlang des Leiterholms 2, sind aber flacher und breiter als die Stege 4 und 5 ausgebildet.

Gemäss dem vorgeschlagenen Verfahren wird das zu verbindende Ende 10 der Leitersprosse 1 durch die Mantelbohrung 3 des Leiterholms 2 geführt und gegen den Steg 4 gepresst, so dass am benachbarten Ende der Leitersprosse 1 ein Stauchring oder Stauchkopf 11 gebildet wird. Die Breitenausdehnung 12 des Stauchrings oder Stauchkopfs ist durch die beiden Stege 8 und 9 begrenzt. In der eingepressten Stellung wird die Leitersprosse 1 mit Hilfe des Stegs 4 festgehalten und zwischen der Rohrwand bzw. den Stegen 8 und 9 verklemmt, so dass sie weder wegrutschen noch sich drehen kann. Die mit dem Stauchring 11 zusammenwirkenden Stege 8 und 9 untergreifen den Stauchring und dienen als Arretierung in der Längsrichtung für die Leitersprosse 1.

Um die Stauchringbildung zu unterstützen, kann es zweckmässig sein, die Wandstärke am zu stauchenden Ende 13 der Leitersprosse 1 herabzusetzen. Dies ist in Fig. 3 als Einzelheit dargestellt, wobei strichpunktiert das gestauchte Ende bei 11 veranschaulicht ist. Eine andere Möglichkeit besteht darin, dass das zu stauchende Ende der Leitersprosse konisch verjüngt oder sonst ausgekerbt ausgebildet wird. Die letzte Ausführung ist aus Fig. 4 ersichtlich. Das Ende des Rohrs zur Bildung der Leitersprosse 1 ist mit einer inneren Ausdrehung 14 versehen und dadurch geschwächt.

In der beschriebenen Weise wird eine absolut zuverlässige Rohrverbindung gebildet, welche praktisch unlösbar ist. Es besteht die Möglichkeit, Leitern aus vorfabrizierten Elementen sehr schnell und einfach ohne Verschweissung zusammenzubauen, welche den meisten Anforderungen anstandslos genügt. Sollte eine absolut wasserdichte und gegen äussere chemische und physikalische Einflüsse resistente Verbindung gebildet werden, so kann im Bereiche der Mantelbohrung die Durchdringungsstelle mit einem Silikonpräparat abgedichtet werden.

## Patentansprüche

1. Verfahren zum Verbinden zweier zumindest annähernd senkrecht zueinander stehenden Rohrstücke (1, 2) mit unterschiedlichem Durchmesser, insbesondere zum Verbinden von Leitersprossen und Leiterholmen, bei welchem das zu verbindende Ende (10) des dünneren Rohrstücks (1) durch eine Mantelbohrung (3) des dickeren Rohrstücks (2) geführt und im Inneren des dickeren Rohrstücks (2) gestaucht wird, dadurch gekennzeichnet, dass das dünnere Rohr (1) gegen eine an der Innenwand des dickeren Rohrs (2) gegenüber der Mantelbohrung (3) angeordnete Rippe (4) gepresst wird, so dass am Ende des dünneren Rohrstücks (1) ein Stauchring oder Stauchkopf (11) von begrenzter Breitenausdehnung (12) gebildet wird, und dass die Arretierung des dünneren Rohrs (1) in der Längsrichtung sowie die Begrenzung der Breitenausdehnung (12) des Stauchrings (11) durch weitere Rippen (8, 9) erfolgt, die bezüglich der ersten Rippe (4) symmetrisch seitlich des dünneren Rohres (1) an der Innenwand des dickeren Rohrs (2) angeordnet sind.

2. Verfahren nach Anspruch 1, dadurch gekennzeichnet, dass eine Arretierung des dünneren Rohrs (1) gegen Verdrehung durch die erste Rippe (4) erfolgt, gegen welchen das Rohrende (10) gepresst wurde.

3. Verfahren nach den Ansprüchen 1 und 2, dadurch gekennzeichnet, dass als dünneres Rohr (1) ein solches mit verringerter Wandstärke (13) am zu stauchenden Ende verwendet wird.

4. Rohrverbindung zwischen zwei zumindest annähernd senkrecht zueinander stehenden Rohrstücke mit unterschiedlichem Durchmesser, insbesondere zwischen Leiterholm und Leitersprosse, bei welcher das zu verbindende Ende (10) des dünneren Rohrstücks (1) durch eine Mantelbohrung (3) des dickeren Rohrstücks (2) geführt und im Inneren des dickeren Rohrstücks gestaucht ist, dadurch gekennzeichnet, dass die Verbindung aus der Verankerung des durch die Mantelbohrung (3) des dickeren Rohrstücks (2) geführten und dort gegen eine, gegenüber der Mantelbohrung (3) an der Innenwand des dickeren Rohrstücks (2) angeordnete Rippe (4) gepressten dünneren Rohrstücks (1) besteht, dessen durch die Mantelbohrung (3) geführtes Ende (10) eine stauchringartige Deformierung (11) aufweist, wobei zur Arretierung des gestauchten Endes des dünneren Rohrstücks (1) zu beiden Seiten der Rippe (4) zusätzliche, den Stauchring (11) hintergreifende, parallele, entlang der Innenwand des dickeren Rohrstücks (2) angeordnete Rippen (8, 9) vorhanden sind.

5. Rohrverbindung nach Anspruch 4, dadurch gekennzeichnet, dass die Wandstärke (13) des dünneren Rohrstücks (1) im Bereich der zu verbindenden und strauchringförmig zu deformierenden Enden (11) verringert ist.

6. Rohrverbindung nach Anspruch 5, dadurch gekennzeichnet, dass die zu stauchenden Enden des dünneren Rohrstücks konisch verjüngt ausgebildet sind.

7. Rohrverbindung nach Anspruch 5, dadurch gekennzeichnet, dass die zu stauchenden Enden des dünneren Rohrstücks durch Ausdrehung geschwächt ausgebildet sind.

## Claims

1. Method of connecting two tube pieces (1, 2) which are located at least approximately perpendicularly with respect to each other and have different diameters, in particular for connecting ladder rungs and ladder strings, in which method the end (10), of the thinner tube piece (1), which is to be connected is guided through a casing bore (3) of the thicker tube piece (2) and is upset in the interior of the thicker tube piece (2), characterized in that the thinner tube (1) is pressed against a rib (4) which is arranged on the inner wall of the thicker tube (2), opposite the casing bore (3), with the result that an upset ring or upset head (11) of restricted width extent (12) is formed at the end of the thinner tube piece (1), and in that the securing of the thinner tube (1) in the longitudinal direction and the restriction of the width extent (12) of the upset ring (11) is effected by further ribs (8, 9) which, relative to the first rib (4), are arranged on the inner wall of the thicker tube (2), symmetrically on either side of the thinner tube (1).

2. Method according to Claim 1, characterized in that the thinner tube (1) is secured against rotation by the first rib (4), against which the tube end (10) has been pressed.

3. Method according to Claims 1 and 2, characterized in that a tube with a reduced wall thickness (13) at the end to be upset is used as the thinner tube (1).

4. Tube connection between two tube pieces which are located at least approximately perpendicularly with respect to each other and have different diameters, in particular between ladder string and ladder rung, in which tube connection the end (10), of the thinner tube piece (1), which is to be connected is guided through a casing bore (3) of the thicker tube piece (2) and is upset in the interior of the thicker tube piece, characterized in that the connection is constituted by the anchoring of the thinner tube piece (1) which is guided through the casing bore (3) of the thicker tube piece (2) and, there, is pressed against a rib (4), which is arranged on the inner wall of the thicker tube piece (2), opposite the casing bore (3), and whose end (10) which is guided through the casing bore (3) exhibits an upsetring-type deformation (11), there being provided, in order to secure the upset end of the thinner tube piece (1), on both sides of the rib (4), additional, parallel ribs (8, 9) which engage behind the upset ring (11) and are arranged along the inner wall of the thicker tube piece (2).

5. Tube connection according to Claim 4, characterized in that the wall thickness (13) of the thinner tube piece (1) is reduced in the region of the ends (11) which are to be connected and deformed in the form of an upset ring.

6. Tube connection according to Claim 5, characterized in that those ends of the thinner tube piece which are to be upset are configured in a conically tapered manner.

7. Tube connection according to Claim 5, characterized in that those ends of the thinner tube piece which are to be upset are configured in a thinned manner by hollowing.

## Revendications

1. Procédé permettant l'assemblage de deux pièces tubulaires (1, 2) qui sont au moins approximativement perpendiculaires l'une à l'autre et ont des diamètres différents, notamment l'assemblage de barreaux d'échelle et de montants d'échelle, selon lequel on fait passer l'extrémité à assembler (10) de la pièce tubulaire (1) de plus petit diamètre dans un trou (3) de l'enveloppe cylindrique de la pièce tubulaire (2) de plus grand diamètre et on la refoule à l'intérieur de la pièce tubulaire (2) de plus grand diamètre, caractérisé en ce qu'on applique sous pression le tube (1) de plus petit diamètre contre une nervure (4) située sur la paroi intérieure du tube (2) de plus grand diamètre en regard du trou (3) de l'enveloppe cylindrique, d'une façon telle qu'un anneau de refoulement ou tête de refoulement (11) ayant une étendue (12) limitée en largeur est formé à l'extrémité de la pièce tubulaire (1) de plus petit diamètre et en ce que l'immobilisation du tube (1) de plus petit diamètre dans la direction longitudinale et la limitation de l'étendue (12) de l'anneau de refoulement (11) en largeur sont obtenues au moyen d'autres nervures (8, 9) qui sont disposées sur la paroi intérieure du tube (2) de plus grand diamètre sur les côtés du tube (1) de plus petit diamètre et d'une manière symétrique vis-à-vis de la première nervure (4).

2. Procédé suivant la revendication 1, caractérisé en ce qu'une immobilisation du tube (1) de plus petit diamètre en rotation s'obtient au moyen de la première nervure (4) contre laquelle l'extrémité (10) du tube est appliquée sous pression.

3. Procédé suivant l'une des revendications 1 et 2, caractérisé en ce que, comme tube (1) de plus petit diamètre, on utilise un tube ayant une épaisseur de paroi (13) réduite à l'endroit de l'extrémité à refouler.

4. Raccord de tubes, entre deux pièces tubulaires qui sont au moins approximativement perpendiculaires l'une à l'autre et ont des diamètres différents, notamment entre un montant d'échelle et un barreau d'échelle, dans lequel l'extrémité à assembler (10) de la pièce tubulaire (1) de plus petit diamètre passe dans un trou (3) de l'enveloppe cylindrique de la pièce tubulaire (2) de plus grand diamètre et est refoulée à l'intérieur de la pièce tubulaire (2) de plus grand diamètre, caractérisé en ce que le raccord est constitué par l'ancrage de la pièce tubulaire (1) de plus petit diamètre qui passe dans le trou (3) de l'enveloppe cylindrique de la pièce tubulaire (2) de plus grand diamètre et est appliquée sous pression, dans cette dernière, contre une nervure (4) située sur la paroi intérieure de la pièce tubulaire (2) de plus grand diamètre en regard du trou (3) de l'enveloppe cylindrique, et dont l'extrémité (10) passant par le trou (3) de l'enveloppe cylindrique comporte une déformation (11) en forme d'anneau de refoulement, tandis que, pour l'immobilisation de l'extrémité refoulée de la pièce tubulaire (1) de plus petit diamètre, il est prévu, de part et d'autre de la nervure (4), des nervures (8, 9) parallèles supplémentaires qui sont disposées le long de la paroi intérieure de la pièce tubulaire (2) de plus grand diamètre et s'accrochent derrière l'anneau de refoulement (11).

5. Raccord de tubes suivant la revendication 4, caractérisé en ce que l'épaisseur de paroi (13) de la pièce tubulaire (1) de plus petit diamètre est réduite dans la zone des extrémités (11) à assembler et à déformer en forme d'anneau de refoulement.

6. Raccord de tubes suivant la revendication 5, caractérisé en ce que les extrémités à refouler de la pièce tubulaire de plus petit diamètre vont en rétrécissant d'une manière conique.

7. Raccord de tubes suivant la revendication 5, caractérisé en ce que les extrémité à refouler de la pièce tubulaire de plus petit diamètre sont affaiblies au moyen d'un évidement réalisé au tour.
